# FASCICULE DE BREVET EUROPEEN

(11) **EP 3 855 901 B1**
(45) Date de publication et mention de la délivrance du brevet: **06.03.2024**
(21) Numéro de dépôt: 19790073.1
(22) Date de dépôt: 27.09.2019
(51) Int. Cl.: A01K 1/035

(54) **APPAREIL DE SECURITE DES ANIMAUX DE COMPAGNIE**
SICHERHEITSVORRICHTUNG FÜR HAUSTIERE
SAFETY DEVICE FOR DOMESTIC ANIMALS

(30) Priorité: 29.09.2018 FR 1871108
(43) Date de publication de la demande: 04.08.2021
(73) Titulaire: Fortune, Christophe, 92100 Boulogne-Billancourt (FR)
(72) Inventeur: Fortune, Christophe, 92100 Boulogne-Billancourt (FR)
(74) Mandataire: Nicolle, Olivier
(86) Numéro de dépôt international: PCT/IB2019/058228
(87) Numéro de publication internationale: WO 2020/065605

(56) Documents cités:
- WO-A1-99/32742
- WO-A1-2008/109931
- US-A- 1 233 230
- US-A- 4 602 764
- US-B1- 7 562 453

## Description

### Domaine de l'invention :

La présente invention concerne un appareil de sécurité des animaux de compagnie, en particulier un appareil pour assurer la sécurité d'un animal de compagnie sur une balustrade de balcon ou similaire, et plus particulièrement, mais pas exclusivement, pour assurer la tranquillité d'esprit des propriétaires de chats possédant un balcon. Un exemple peut être trouvé dans le document US7562453 B1.

### Arrière-plan technologique :

Dans de nombreuses sociétés, de plus en plus de personnes apprécient la présence et la possession d'animaux, tels que les chats en particulier. Dans de nombreux cas, les animaux peuvent fournir une présence et un réconfort, en particulier dans des sociétés de plus en plus individualistes.

Les chats peuvent être de bons compagnons pour beaucoup, mais certains chats sont susceptibles de vagabonder, et peuvent se perdre ou être en danger, en particulier dans des environnements de plus en plus peuplés, par exemple en milieu urbain.

Par exemple, dans certains environnements urbains, un utilisateur qui garde un chat peut avoir un balcon et les chats risquent de sauter ou de tomber accidentellement de ce balcon ou de la balustrade.

Ceci peut être très pénible pour l'utilisateur, car le chat peut être blessé, parfois mortellement, et cette préoccupation est en soi un problème pour les utilisateurs qui sont très attachés à l'animal.

### État de la technique antérieure :

Le document WO 2008 109 931 (BOK) décrit un appareil de confinement d'animaux adapté pour être monté sur un dispositif de clôture ou une structure de bâtiment, ledit appareil comprenant: un élément d'appui allongé, supporté de manière pivotante sur une longueur de ladite structure de clôture ou de bâtiment, bord ou longueur circonférentielle externe, séparés par des pénétrations intermittentes le long de la longueur de membre ou du bord circonférentiel, de sorte que lorsque la patte d'un_animal entre en contact avec l'élément d'appui, ladite patte engage les intrusions intermittentes, entraînant la rotation dudit accessoire, retirant ainsi tout effet de levier disponible pour que ledit animal grimpe ou se balance sur l'appareil.

Le document JP 4 518 837 (KOKOKI et al.) Décrit un dispositif pour empêcher un animal de compagnie, etc. de surmonter une barrière, qui peut empêcher positivement l'animal de compagnie de surmonter la barrière. Le dispositif est formé en projetant une plaque mince vers l'intérieur ou vers l'extérieur à partir d'une extrémité supérieure ou au voisinage de l'extrémité supérieure de la barrière qui est agencée de manière à empêcher les animaux, y compris un animal de compagnie, de passer à travers. De préférence, la plaque est attachée à la clôture de manière à être inclinée vers le bas avec son extrémité distale située plus bas que son extrémité proximale. La plaque a une élasticité et peut être attachée horizontalement à la clôture ou peut être attachée à l'intérieur et à l'extérieur de la clôture.

Le document US 5 143 354 (NOLAN) décrit un dispositif pour empêcher un animal de traverser une clôture au sommet de celui-ci comprenant: (a) des moyens pour fournir une région d'instabilité proximale dudit sommet de ladite barrière comprenant une pluralité d'éléments flexibles s'étendant vers le haut et vers l'extérieur à partir de ladite clôture avec chacun de ladite pluralité d'éléments flexibles dans une relation de butée latérale avec au moins un élément flexible adjacent pour former une rangée sensiblement continue desdits éléments flexibles le long du sommet de ladite barrière; et (b) des moyens pour fixer rigidement ladite pluralité d'éléments flexibles à ladite clôture de sorte que chacun de ladite pluralité d'éléments flexibles soit empêché de tourner autour d'un axe horizontal.

La nécessité de surmonter les problèmes rencontrés sur les dispositifs existants a conduit à la présente invention.

### Résumé de l'invention :

Selon la présente invention, il est fourni un appareil de sécurité des animaux comprenant au moins deux dispositifs de fixation pour balustrade de balcon, au moins deux éléments allongés configurés en utilisation pour joindre horizontalement les dispositifs de fixation respectivement l'un à l'autre, et dont les éléments allongés joignant les dispositifs de fixation sont configurés pour se déformer vers le bas lors de l'application du poids d'un animal tentant de franchir la barrière formée par l'appareil de sécurité. Les dispositifs de fixations sont configurés pour permettre le maintien en tension des éléments allongés, et le déplacement des éléments allongés sur lesquels ils sont fixés permettant la déformation vers le bas desdits éléments allongées lors de l'application du poids d'un animal de compagnie.

L'appareil peut être de préférence configuré pour empêcher les animaux de sauter sur la balustrade du balcon et potentiellement de chuter.

De cette manière, l'appareil peut diminuer l'inquiétude de l'utilisateur et empêcher les animaux de grimper, à la fois en fournissant un moyen de dissuasion visuel, et physique, car l'animal ne pourra pas grimper sur l'appareil grâce au déplacement ou la déformation dans l'appareil empêchant ainsi toute escalade.

Les éléments allongés sont des éléments de corde et peuvent fournir le mécanisme de barrière peuvent être élastiques ou non-élastique, de sorte que les éléments fournissent eux-mêmes avantageusement un mécanisme de barrière efficace à l'animal en empêchant l'animal de grimper sur le mécanisme de barrière, de sorte que l'animal tire l'élément vers le bas lors du contact et est ainsi incapable de peser sur le mécanisme de barrière. Les éléments allongés sont déformables vers le bas lorsque le poids de l'animal essayant de franchir la barrière est appliqué.

Alternativement ou de plus, les éléments de corde peuvent être attachés de manière suffisamment lâche sur les dispositifs ou l'appareil peut être autrement configuré de manière à permettre aux éléments ou d'autres parties de se déplacer en partie lorsque l'animal de compagnie pèse sur un ou plusieurs éléments. Selon un mode particulier de réalisation, les éléments de corde peuvent être des élastomères.

Dans certains modes de réalisation, en outre, ou alternativement, des parties des dispositifs peuvent être configurées pour se déplacer au moins en partie sous le poids de l'animal, et / ou permettre aux éléments de se déplacer et fournir le déplacement pour, ou la partie de déplacement du mécanisme de barrière.

Dans certains modes de réalisation, en outre ou alternativement, l'appareil peut inclure un dispositif d'ancrage, disposé sur l'une des extrémités de l'élément de corde, et pouvant être séparé des dispositifs de fixation sur balustrade permettant ainsi le déplacement du mécanisme de barrière, par exemple sous forme de contrepoids lorsque l'animal déplace la barrière.

Par exemple, le dispositif d'ancrage peut comprendre un dispositif de lest. Un tel dispositif de lest peut être configuré pour équilibrer l'appareil ou empêcher l'appareil ou le mécanisme de barrière de basculer. Par exemple, ledit dispositif de lest peut comprendre du lest pour chaque dispositif de fixation sur balustrade, dans lequel un appareil standard peut comprendre deux dispositifs de fixation sur balustrade et deux dispositifs de lest associés. Par exemple, le dispositif de lest peut être situé en utilisation à l'intérieur du balcon, côté bâtiment, pour empêcher l'appareil de basculer de la balustrade. De cette manière, l'installation de l'appareil peut être facilitée temporairement, ou aisément avec une interférence minimale avec la balustrade elle-même.

Le dispositif de lest dans certains modes de réalisation peut comprendre un lest déplaçable par rapport aux dispositifs de fixation sur balustrade, par exemple de sorte que lorsque les éléments sont déplacés, le lest agit comme contrepoids de manière à ramener les éléments dans une position de départ. De cette façon le lest ou ancrage agit pour tendre le dispositif ou agit contre le poids de l'animal.

Dans certains modes de réalisation, le dispositif d'ancrage peut comprendre, en outre ou alternativement, un lien d'attache. Un tel lien d'attache peut comprendre un moyen de nouage qui est configuré pour créer un noeud autour d'une partie du balcon ou un autre endroit.

Les éléments peuvent comprendre une longueur unique ou un élément unique, dont la longueur peut être enfilée à travers les dispositifs. Le ou les éléments peuvent être fournis dans un matériau ou un revêtement fortement coloré ou rétroréfléchissant ou luminescent.

Dans certains modes de réalisation, l'élément ou les éléments peuvent comprendre un connecteur, lequel connecteur peut comprendre un connecteur d'extrémités. Ce connecteur peut servir à connecter les éléments, ou les extrémités d'un seul élément, ou être situé après un dispositif de manière à joindre l'élément ou empêcher l'élément de dépasser du dispositif.

Dans certains modes de réalisation, le connecteur comprend un moyen de tension. Par exemple, le connecteur peut comprendre une poulie ou un moyen similaire pour enfiler les extrémités de l'élément, en utilisant la friction pour maintenir l'élément en place, par exemple lorsque l'élément est en élastomère.

De cette manière, l'appareil de la présente invention fournit une barrière de corde légère conçue pour être fixée sur des balustrades de balcon pour dissuader les chats de sauter sur l'appareil et / ou pour empêcher tout animal capable de sauter de passer par-dessus le système.

Selon un mode de réalisation de l'invention, le dispositif d'ancrage comprend une plaque apte à être fixée en utilisation à la balustrade, et une portion d'attache verticale avec au moins trois trous pour l'attache, le passage et la sécurisation des éléments allongés au dispositif d'ancrage.

Selon un mode de réalisation alternatif conforme à l'invention, le dispositif d'ancrage comprend des moyens de fixation à la rambarde, des moyens de guidage, et des moyens d'auto blocage de l'élément de corde. Les moyens d'auto blocage sont aptes à maintenir sous tension ledit élément de corde en cas de poids appliqué vers le bas entre deux dispositifs et disposent d'une structure en ailettes faisant saillie verticalement vers le haut, et disposée en juxtaposition derrière des moyens de guidage. Les espaces interstitiels séparant au moins deux ailettes, forment au moins un évidement en forme de V, lequel permet le blocage de l'élément de corde par pincement.

En pratique, les surfaces formant l'évidement en forme de V entre les structures en ailettes disposent d'une surface en relief permettant l'augmentation du coefficient de friction avec l'élément de corde et améliorant ainsi l'ancrage dudit élément de corde.

Dans certains modes de réalisation, les dispositifs peuvent comprendre une ou plusieurs portions verticales et une ou plusieurs portions d'interface de balustrade, comprenant par exemple des équerres en forme de L, dans laquelle le bras long du L est vertical, et le bras court est configuré pour reposer sur la surface supérieure du balcon ou de la balustrade.

Les portions d'interface de balustrade fournissent un moyen d'interface de balustrade, qui est configuré pour adhérer ou fixer autrement le dispositif sur la balustrade, par exemple par inclusion de portions magnétiques ou auto-adhésives ou élastiquement déformables telles que des clips ou des pinces à ressort. Les portions d'interface peuvent comprendre des parties filetées, comprenant par exemple des 15 portions de mâchoire de serrage filetées.

Par exemple, la partie d'interface peut comprendre plusieurs bandes magnétiques sur une surface inférieure qui permettent aux dispositifs d'être facilement fixés aux balustrades de balcon existantes.

Un mode de réalisation avec base munie de pas de vis ainsi qu'un mode de réalisation avec adhésif seront fournis afin de compenser les matériaux de balustrade non ferreux. Dans certains modes de réalisation de l'appareil, plus d'une portion d'interface peut être disponible, et / ou plus d'un moyen d'interface.

Un mode de réalisation préféré de l'invention va maintenant être décrit à titre d'exemple uniquement et en référence aux Figures dans lesquelles :

### Brève description des figures :

[Fig.1] représente une vue isométrique détaillée d'un mode de réalisation de l'appareil selon la présente invention, en utilisation sur une balustrade de balcon, avec un seul dispositif visible ;
[Fig.2] représente une vue isométrique inversée du mode de réalisation d'un dispositif destiné à être utilisé avec l'appareil représenté dans la Figure 1 ;
[Fig.3] représente une vue de profil d'un second mode de réalisation du dispositif selon la présente invention ;

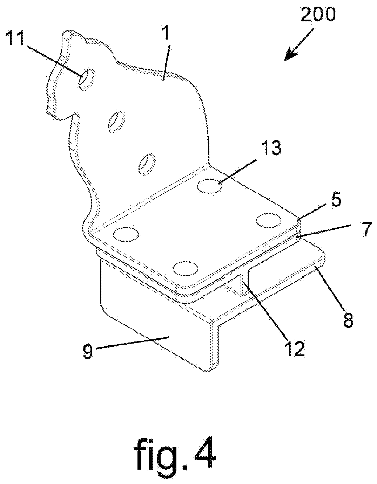

[Fig.4] représente une vue isométrique du second mode de réalisation du dispositif tel que représenté dans la Figure 3 ;
[Fig.5] représente une vue isométrique inversée du mode de réalisation du dispositif représenté dans la Figure 3 ;
[Fig.6] représentent des vues isométriques du mode de réalisation du dispositif représenté dans la Figure 2 ;
[Fig.7] représente une vue isométrique inversée d'un troisième mode de réalisation du dispositif destiné à être utilisé avec un appareil selon la présente invention ;
[Fig.8] représente une vue de face d'un mode de réalisation de l'appareil selon la présente invention, en utilisation ;
[Fig.9] représente un schéma d'une vue détaillée isométrique d'un mode de réalisation de l'appareil selon la présente invention utilisant un dispositif d'ancrage.
[Fig.10] représente un schéma d'un second mode de réalisation de l'ancrage dans un mode de réalisation de l'appareil de la présente invention ; et
[Fig.11] représente une vue isométrique du second mode de réalisation de l'ancrage, comme représenté dans la Figure 10.
[Fig.12] représente une vue de profil d'un mode de réalisation alternatif du dispositif selon la présente invention ;
[Fig.13] représente une vue isométrique d'un mode de réalisation alternatif de l'ancrage ;
[Fig.14] représente une vue isométrique d'un mode de réalisation alternatif de l'ancrage comme représenté dans la figure 13 ;
[Fig.15] représente une vue isométrique d'un mode de réalisation alternatif de l'ancrage comme représenté dans la figure 13 ; et
[Fig.16] représente une vue de dessus du mode de réalisation alternatif de l'ancrage comme représenté dans la figure 13.

### Description détaillée des Figures :

En référence générale au mode de réalisation représenté, le mode de réalisation comprend un appareil de sécurité des animaux de compagnie 99 comprenant deux dispositifs de fixation sur balustrade de balcon 200 ou plus et un mécanisme de barrière 100 lequel le mécanisme 100 comprend deux ou plusieurs éléments allongés 102 qui sont configurés en utilisation pour joindre horizontalement les dispositifs 200, lesquels dispositifs 200 sont configurés pour être espacés et fixés sur la balustrade avec les éléments 102 les joignant, et les éléments 102 sont configurés pour se déplacer vers le bas sous le poids d'un animal de compagnie.

En référence en particulier aux modes de réalisation des dispositifs représentés dans les Figures, les dispositifs peuvent être constitués de plastique moulé par injection tel que l'acrylonitrile-butadiène-styrène (ABS) ou un métal ou un alliage.

Les dispositifs 200 peuvent ainsi être facilement colorés, au choix, à la fabrication, et en particulier dans certains des modes de réalisation représentés comprenant des portions séparées, par exemple en particulier les portions verticales 1 du dispositif peuvent être conçues en ABS, où l'interface de balustrade 2 peut être conçue en alliage ou en métal de manière à fournir une plus grande résistance structurelle, et / ou les portions verticales 1 peuvent être conçues en ABS transparent ou translucide afin de fournir un impact esthétique minimal à l'utilisateur ou à l'animal.

Les dispositifs 200 ont une portion verticale 1, qui est située à la verticale d'une portion d'interface de balustrade 2, qui fournit le moyen d'interface de balustrade.

La portion verticale 1 comporte trois perforations 11 espacées verticalement en diagonale, en référence à un rayon s'étendant orthogonalement à un axe définit par la balustrade ou le balcon 1000.

Un seul élément peut être enfilé à travers les perforations de manière à former trois éléments 102 espacés verticalement et horizontalement en utilisation.

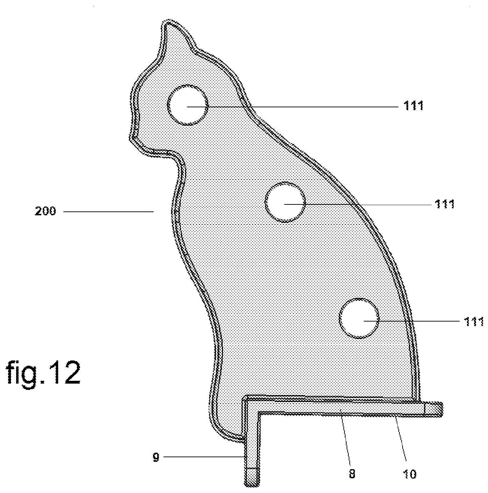

En référence à la figure 12, les perforations 111 du dispositif 200 sont apte à permettre le passage de l'élément de corde 102 à l'extérieur et au-dessus de la balustrade au lieu d'être orienté vers l'intérieur de la balustrade.

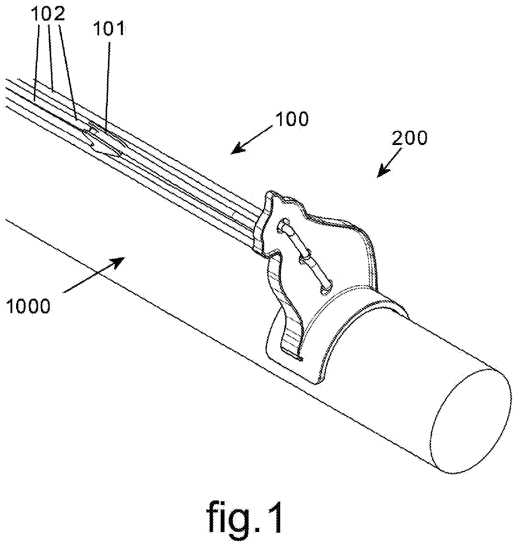

Dans le mode de réalisation de l'appareil représenté dans la Figure 1, l'élément 102 est raccordé à un connecteur d'extrémités 101, lequel connecteur est situé entre les dispositifs pour joindre deux extrémités d'un seul élément et permet de diminuer ou d'augmenter la tension de(s) l'élément(s) par ajustement coulissant du connecteur.

Le connecteur comprend un tendeur pour l'élément.

Les extrémités de l'élément sont ainsi enfilées à travers les perforations 11 et reliées l'une à l'autre par l'intermédiaire de ce connecteur tendeur de corde 101. Ce connecteur 101 permet à l'utilisateur de tirer facilement sur l'extrémité de l'élément qui a été enfilé à travers le connecteur, de manière à augmenter la tension et corriger tout relâchement subi au fil du temps. Le mécanisme de barrière peut comprendre un seul élément de corde enfilé à travers les perforations sur les dispositifs. L'élément de corde peut être élastomère.

Dans certains modes de réalisation, le connecteur, ou une pluralité de connecteurs, peut être situé, en utilisation, au même niveau que ou après les perforations ou le dispositif, de sorte que plusieurs éléments peuvent être utilisés et joints au niveau des connecteurs. En outre ou alternativement, ceci peut permettre d'utiliser l'excédent d'élément au-delà des connecteurs pour être utilisé comme lien d'attache sur le balcon ou ailleurs afin d'ancrer le dispositif et l'appareil.

En utilisation, l'appareil peut être envisagé comme un kit comprenant des dispositifs, et une longueur d'élément de corde, qui à son tour peut être attachée à la balustrade et tendue le cas échéant en utilisant le connecteur, après avoir coupé l'élément à la bonne longueur et avoir installé les dispositifs. Ce kit de pièces permet ainsi à l'appareil d'être approprié pour différents balcons.

De cette manière, lorsque le dispositif est disposé le long de la balustrade ou du balcon, la portion verticale 1 s'étend au-dessus de la balustrade 1000 lors de l'utilisation et les éléments forment une barrière qui s'incline vers le bâtiment. L'élément peut également être coloré de façon à dissuader un animal qui regarde vers le haut.

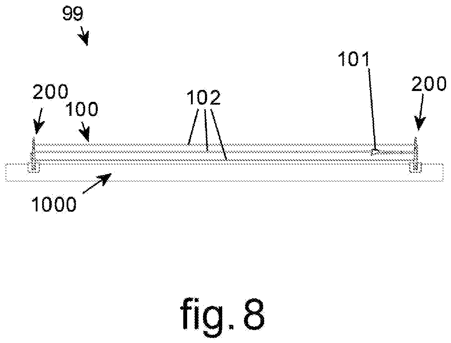

Comme représenté dans la Figure 8, les éléments allongés 102 sont constitués d'une corde constituée de cordes élastiques. Elle est élastomère de manière à fournir un mécanisme de barrière qui se déplace sous le poids de l'animal.

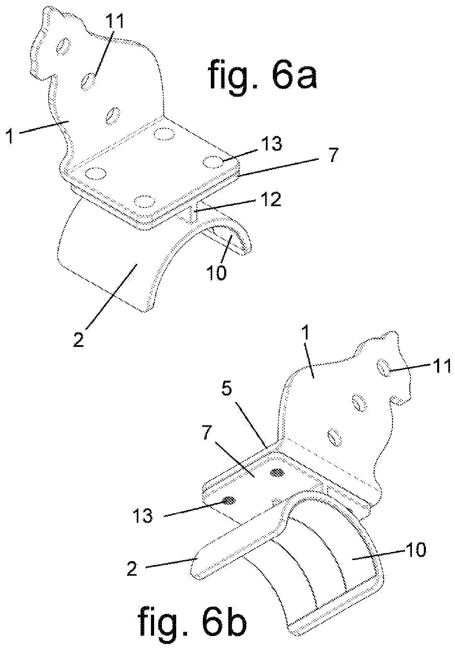

La portion d'interface de balustrade 2 dans les modes de réalisation représentés dans les Figures 1 et 6 comprend une portion d'interface de balustrade incurvée pour servir d'interface avec une balustrade incurvée ou cylindrique. Le mode de réalisation représenté dans la Figure 1 comprend une portion d'interface de balustrade incurvée 2 avec une surface inférieure 6 configurée pour recevoir un moyen d'interface de balustrade, qui peut être fourni en utilisation.

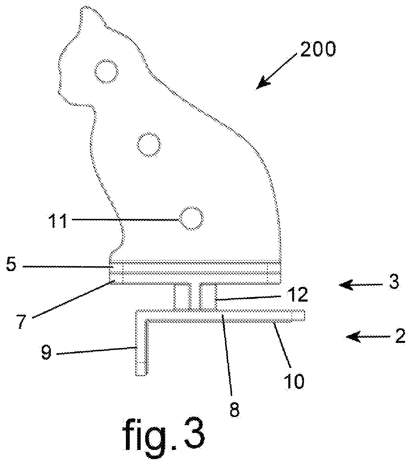

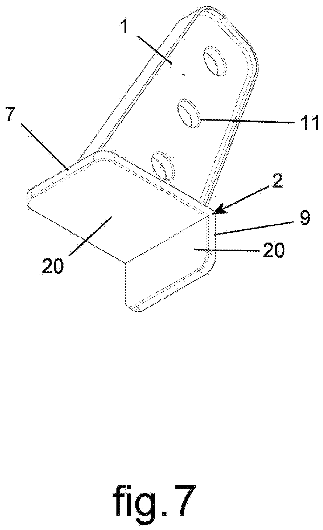

En référence au mode de réalisation représenté dans les Figures 3 et 7, le mode de réalisation comprend une portion d'interface de balustrade rigide en forme de L 2 configurée pour s'adapter sur, contre et autour d'une section de balustrade carrée et rectangulaire comprenant un bras long 8 et un bras court 9, où le bras long 8 recouvre la surface supérieure de la balustrade et le bras court 9 est situé contre la surface frontale de la balustrade de manière à renforcer le mode de réalisation et empêcher un basculement dans le cas où un chat essaierait de sauter par-dessus. Dans certains autres modes de réalisation, le renfort peut être distal au bâtiment en utilisation, de manière à renforcer le dispositif contre le basculement vers le bâtiment sous le poids de l'animal.

Dans certains modes de réalisation, cette portion d'interface de balustrade 2 peut comprendre un troisième bras, formant une forme de C qui se clipse sur ou par-dessus la balustrade. Dans de tels modes de réalisation, la forme de C peut être réglable avec un ou deux bras courts pouvant être ajustés de manière coulissante l'un et l'autre afin de se clipser ou se fermer sur une balustrade plus large ou plus étroite.

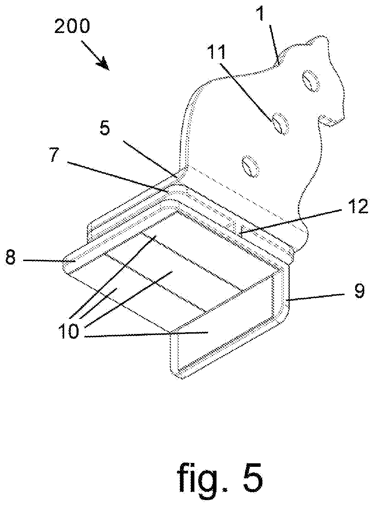

Dans certains des modes de réalisation représentés (Figures 5 et 6), la surface inférieure ou le moyen d'interface d'une telle portion d'interface de balustrade comprend le moyen d'interface de balustrade comprenant des bandes de fixation sur balustrade 10. De telles bandes 10 peuvent comprendre des bandes ferromagnétiques, ou peuvent comprendre un matériau auto-adhésif.

Dans d'autres modes de réalisation représentés, la surface inférieure ou le moyen d'interface comprend des bandes continues 20 de matériau adhésif.

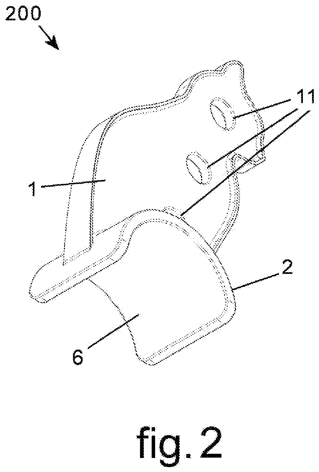

Comme illustré dans les modes de réalisation représentés dans les Figures 1, la portion verticale (1 dans la Figure 2) peut comprendre une forme ou une silhouette esthétiquement pertinente, qui peut aider l'utilisateur à identifier l'utilité de l'appareil. Alternativement, la portion verticale 1 peut comprendre une forme lisse de parallélogramme comme représenté dans la Figure 7.

Comme illustré dans les modes de réalisation représentés dans la Figure 3, les dispositifs peuvent comprendre une portion élastique servant de base 3 entre la portion verticale 1 et la portion d'interface de balustrade 2. Celle-ci comprend une partie supérieure 7 parallèle et fixée à la partie inférieure de la portion verticale 5, et un support orthogonal 12, lequel support comporte quatre bras en croix (en plan) et permet à la partie supérieure 7 de bouger légèrement par rapport à la portion d'interface de balustrade 2. Une telle portion élastique 3 peut permettre que du mouvement soit supporté entre les autres portions, de sorte que du poids sur les éléments et les dispositifs soit supporté au moins en partie, sans déstabilisation ou tension sur la fixation de la balustrade.

Dans le mode de réalisation représenté dans les Figures 3 et 6, la portion verticale 1 peut être facilement déplacée de la portion servant de base 3 et / ou de l'interface de balustrade 2, lesquelles portions sont connectées en utilisation par des filetages 13. De cette manière, la portion verticale et les éléments peuvent être déplacés de la balustrade facilement et / ou temporairement selon les besoins, en particulier lorsque la portion 10 d'interface de balustrade utilise un moyen adhésif pour se fixer au balcon.

Dans certains modes de réalisation la portion verticale peut être amovible et remplaçable, laquelle portion verticale 1 et la portion d'interface de balustrade 2 comprennent un moyen de connexion réversible pour permettre des variations en thème ou en esthétique de l'appareil.

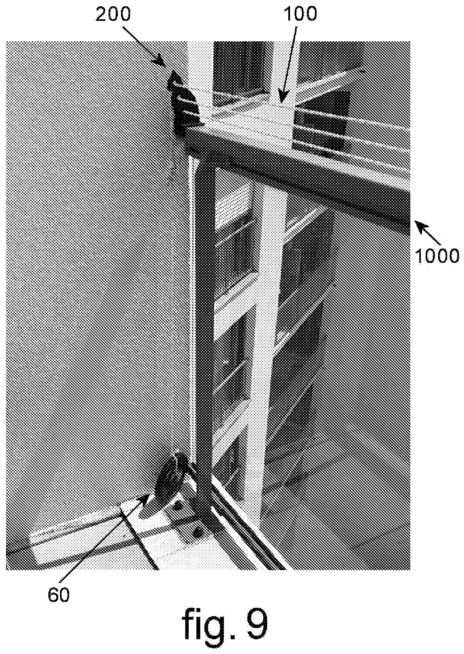

En référence au mode de réalisation de l'appareil représenté dans la Figure 9, le mode de réalisation comprend un dispositif d'ancrage 60, qui fournit un lest au mécanisme de barrière 100.

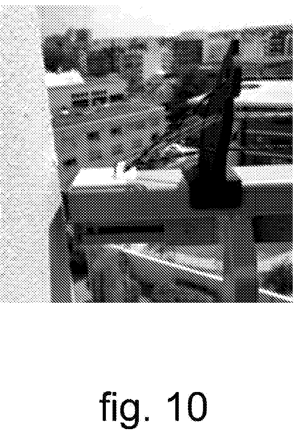

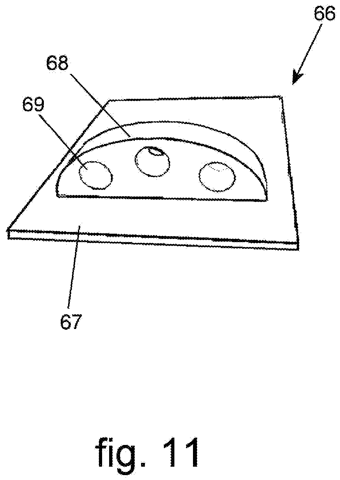

Un second mode de réalisation de l'ancrage 66 comme représenté dans les Figures 10 et 11 peuvent comprendre une plaque 67 fixée en utilisation avec de l'adhésif à la balustrade, et une portion d'attache verticale 68 avec trois ou une autre quantité de trous 69 pour l'attache, le passage et la sécurisation des éléments 102.

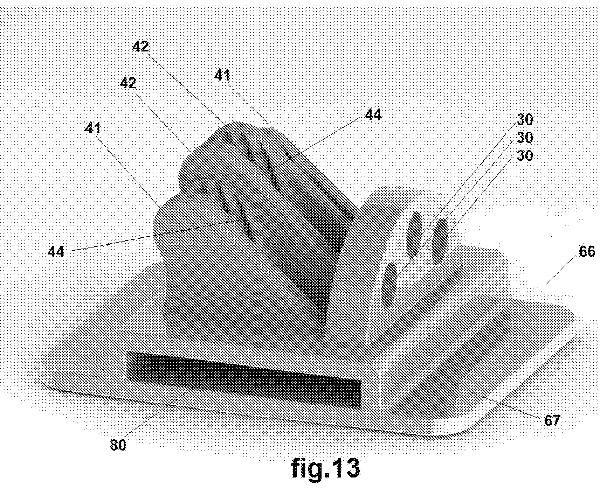

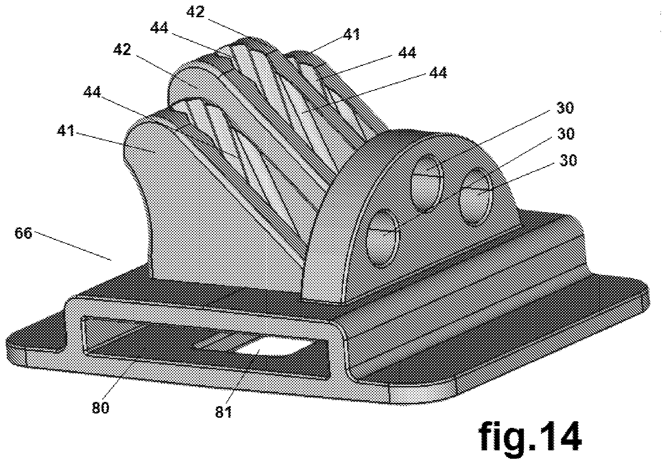

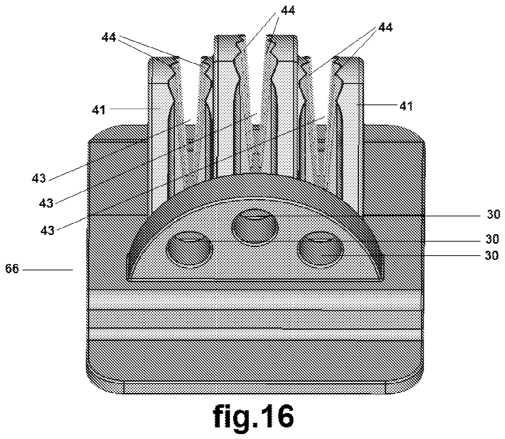

En référence aux figures 13 à 16, selon un mode réalisation conforme à l'invention, le dispositif d'ancrage 66 comprend des moyens de fixation à la rambarde, des moyens de guidage 30, et des moyens d'auto blocage de l'élément de corde 102.

Le dispositif d'ancrage 66 comprend des moyens de fixation 80, apte à permettre la fixation du dispositif d'ancrage 66 à la balustrade selon une position choisie par rapport au dispositif 200. Les moyens de fixations à la balustrade comportent un espace ajouré 80 apte à laisser passer une sangle fixant ainsi le dispositif d'ancrage 66 à la rambarde.

En pratique, l'ouverture 80 peut être de type fermée, semi-ouverte, ou ouverte. L'ouverture 80 peut disposer d'un évidement 81 apte à s'adapter aux imperfections et à la nature de la balustrade.

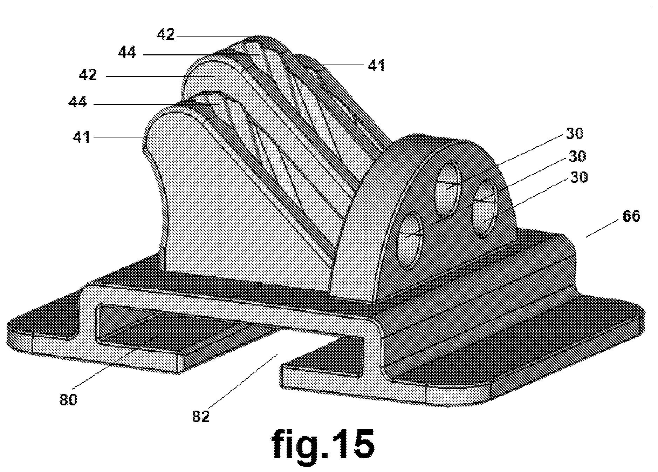

En référence à la figure 15, l'ouverture 80 peut alternativement disposer d'un évidement complet 82 s'étendant sur toute la longueur de la plaque 67, permettant d'adapter le dispositif d'ancrage 66 à la forme de la balustrade.

Un évidement partiel 81 ou total 82 permet en outre faciliter le démoulage de la pièce lors de la production.

En pratique, les moyens de fixation du dispositif d'ancrage 66 comprennent une plaque 67 disposant sur sa face inférieure d'un élément adhésif permettant la fixation à la balustrade. Les balustrades étant constituées de composés métalliques, de PVC, ou de bois ou pierre, la configuration des moyens de fixation du dispositif d'ancrage 66 permet son installation sur tout type de surface. A titre d'exemple, la surface adhésive peut être de type 3M extra fort.

Le dispositif d'ancrage 66 comprend en outre des moyens de guidage 30 comprenant une surface comportant au moins une perforation, guidant ainsi l'élément de corde 102 vers au moins un moyen d'auto-blocage, modulant ainsi la tension appliquée à l'élément de corde 102 entre les dispositifs 200.

A titre d'exemple, les moyens de guidage comportent 3 perforations régulièrement espacés.

Le dispositif d'ancrage comprend également des moyens d'auto-blocage de l'élément de corde 102, aptes à maintenir ledit élément de corde 102 en tension guidé par les moyens de guidage 30 depuis les dispositifs 200.

Les moyens d'auto-blocage comprennent une structure en ailettes 41, 42, faisant saillie verticalement vers le haut, et disposée en juxtaposition derrière les moyens de guidage. L'espace interstitiel 43 entre chaque ailette forme un évidement en forme de V, lequel permet le blocage de l'élément de corde 102 par enfoncement de celui-ci du haut vers le bas de l'évidement, permettant ainsi le pincement de l'élément de corde 102.

Selon un mode de réalisation conforme à l'invention, le dispositif d'ancrage 66 comprend des espaces interstitiels dans lesquels les surfaces entre les structures en ailettes 41,42 disposent d'une surface en relief 44, permettant l'augmentation du coefficient de friction avec l'élément de corde 102 et améliorant l'ancrage dudit élément de corde 102. A titre d'exemple, la surface en relief 44 peut être de type surface ondulée.

En pratique, le dispositif d'ancrage 66 comprend 3 ailettes permettant l'auto-blocage de l'élément de corde 102.

L'invention a été décrite à titre d'exemple uniquement et les modes de réalisation mentionnés ci-dessus peuvent varier sans être exclus du champ de l'invention telle que définie par les revendications.

## Revendications

1. Appareil de sécurité pour animaux de compagnie (99) comprenant :
- au moins deux dispositifs de fixation pour balustrade de balcon (200) ;
- au moins deux éléments allongés (102) configurés en utilisation pour joindre horizontalement les deux dispositifs de fixation (200) respectivement l'un à l'autre, **caractérisé en ce que** les deux éléments allongés (102) joignant les deux dispositifs de fixation (200) sont configurés pour se déformer vers le bas lors de l'application du poids d'un animal tentant de franchir la barrière formée par l'appareil de sécurité (99), et **en ce que** les dispositifs de fixation (200) sont configurés pour permettre le maintien en tension des éléments allongés (102), et le déplacement des éléments allongés (102) sur lesquels ils sont fixés permettant la déformation vers le bas desdits éléments allongées (102) lors de l'application du poids d'un animal de compagnie ; et **en ce que** les éléments allongées de l'appareil de sécurité comprennent en outre un élément de corde (102) enfilé à travers des perforations (11) ménagées sur chaque dispositif de fixation (200), un dispositif d'ancrage (66) sur l'extrémité d'un élément de corde (102), des moyens de fixation à une balustrade, des moyens de guidage (30), et des moyens d'auto blocage des éléments de corde (102)..

2. Appareil selon la revendication 1, dans lequel l'élément de corde (102) est élastomère.

3. Appareil selon la revendication 1 ou la revendication 2 comprenant un connecteur (101) pour connecter les extrémités d'un élément de corde (102).

4. Appareil selon la revendication 3, dans lequel le connecteur (101) comprend un tendeur pour l'élément de corde (102).

5. Appareil selon l'une quelconque des revendications précédentes, dans lequel chaque dispositif de fixation (200) comprend une portion verticale (1) et une portion horizontale d'interface de balustrade (2) avec un moyen d'interface de balustrade (10, 20).

6. Appareil selon la revendication 5, dans lequel le moyen d'interface de balustrade (10, 20) appartient au groupe formé par : adhésif, ferromagnétique.

7. Appareil selon la revendication 5, dans lequel le dispositif comprend une portion d'interface de balustrade (2) détachable de la portion verticale (1).

8. Appareil selon la revendication 5, **caractérisé en ce que** le dispositif d'ancrage (66) comprend une plaque (67) apte à être fixée en utilisation à la balustrade, et une portion d'attache verticale (68) avec au moins trois trous (69) pour l'attache, le passage et la sécurisation des éléments de corde (102) au dispositif d'ancrage (66).

9. Appareil selon la revendication 5, **caractérisé en ce que** le dispositif d'ancrage (66) comprend des moyens d'auto blocage, aptes à maintenir sous tension chaque élément de corde (102) en cas de poids appliqué vers le bas entre deux dispositifs de fixation (200).

10. Appareil selon la revendication 9, **caractérisé en ce que** les moyens d'auto blocage comprennent une structure en ailettes (41, 42) faisant saillie verticalement vers le haut, et disposée en juxtaposition derrière des moyens de guidage (30).

11. Appareil selon la revendication 10, **caractérisé en ce que** des espaces interstitiels (43) séparant au moins deux ailettes, forment au moins un évidement en forme de V, lequel permet le blocage de l'élément de corde (102) par pincement.

12. Appareil selon la revendication 11, **caractérisé en ce que** les surfaces formant l'évidement en forme de V entre les structures en ailettes (41,42) disposent d'une surface en relief (44) permettant l'augmentation du coefficient de friction avec l'élément de corde (102) et améliorant l'ancrage dudit élément de corde (102).

## Patentansprüche

1. Sicherheitsvorrichtung für Haustiere (99), die folgendes umfasst:
- mindestens zwei Befestigungsvorrichtungen für Balkongeländer (200);
- mindestens zwei langgestreckte Elemente (102), die so gestaltet sind, dass sie im Gebrauch die beiden Befestigungsvorrichtungen (200) horizontal jeweils miteinander verbinden,
**dadurch gekennzeichnet, dass** die beiden langgestreckten Elemente (102), die die beiden Befestigungsvorrichtungen (200) miteinander verbinden, so gestaltet sind, dass sie sich nach unten verformen, wenn das Gewicht eines Tieres auf sie einwirkt, das versucht, die von der Sicherheitsvorrichtung (99) gebildete Barriere zu überwinden, dass die Befestigungsvorrichtungen (200) so gestaltet sind, dass sie die langgestreckten Elemente (102) unter Spannung halten, dass die Bewegung der langgestreckten Elemente (102), an denen sie befestigt sind, die Verformung der langgestreckten Elemente (102) nach unten ermöglicht, wenn das Gewicht eines Haustieres darauf einwirkt,
und dass die langgestreckten Elemente der Sicherheitsvorrichtung außerdem ein Seilelement (102) umfassen, das durch Perforationen (11), die an jeder Befestigungsvorrichtung (200) angebracht sind, hindurch gezogen ist, eine Verankerungsvorrichtung (66) am Ende eines Seilelements (102), Mittel zur Befestigung an einem Geländer, Führungsmittel (30) und Mittel zur Selbsthemmung der Seilelemente (102).

2. Vorrichtung nach Anspruch 1, wobei das Seilelement (102) ein Elastomerseilelement ist.

3. Vorrichtung nach Anspruch 1 oder 2, die einen Verbinder (101) zum Verbinden der Enden eines Seilelements (102) umfasst.

4. Vorrichtung nach Anspruch 3, wobei der Verbinder (101) einen Spanner für das Seilelement (102) umfasst.

5. Vorrichtung nach einem der vorhergehenden Ansprüche, wobei jede Befestigungsvorrichtung (200) einen vertikalen Abschnitt
(1) und einen horizontalen Geländer-Grenzflächenabschnitt
(2) mit einem Geländer-Grenzflächenmittel (10, 20) umfasst.

6. Vorrichtung nach Anspruch 5, wobei das Geländer-Grenzflächenmittel (10, 20) zur Gruppe bestehend aus Klebemitteln und ferromagnetischen Mitteln gehört.

7. Vorrichtung nach Anspruch 5, wobei die Vorrichtung einen Geländer-Grenzflächenabschnitt (2) umfasst, der vom vertikalen Abschnitt (1) abgelöst werden kann.

8. Gerät nach Anspruch 5,
**dadurch gekennzeichnet, dass** die Verankerungsvorrichtung (66) eine Platte (67) umfasst, die im Gebrauch am Geländer befestigt werden kann, und einen vertikalen Befestigungsabschnitt (68) mit mindestens drei Löchern (69) zum Befestigen, Durchführen und Sichern der Seilelemente (102) an der Verankerungsvorrichtung (66).

9. Vorrichtung nach Anspruch 5, **dadurch gekennzeichnet, dass** die Verankerungsvorrichtung (66) Mittel zur Selbsthemmung umfasst, die jedes Seilelement (102) unter Spannung halten können, wenn zwischen zwei Befestigungsvorrichtungen (200) ein Gewicht nach unten einwirkt.

10. Vorrichtung nach Anspruch 9, **dadurch gekennzeichnet, dass** die Mittel zur Selbsthemmung eine Flügelstruktur (41, 42) umfassen, die vertikal nach oben vorsteht und in Reihe hinter Führungsmitteln (30) angeordnet ist.

11. Vorrichtung nach Anspruch 10, **dadurch gekennzeichnet, dass** Zwischenräume (43) zwischen mindestens zwei Flügeln mindestens eine V-förmige Aussparung bilden, die das Blockieren des Seilelements (102) durch Festklemmen ermöglicht.

12. Vorrichtung nach Anspruch 11, **dadurch gekennzeichnet, dass** die Flächen, die die V-förmige Aussparung zwischen den Flügelstrukturen (41, 42) bilden, eine erhabene Oberfläche (44) aufweisen, die eine Erhöhung des Reibungskoeffizienten mit dem Seilelement (102) ermöglicht und die Verankerung des Seilelements (102) verbessert.

## Claims

1. A pet safety device (99) comprising:
- at least two fastening devices for balcony balustrades (200);
- at least two elongated members (102) configured in use to join the two fastening devices (200) horizontally to each other,
**characterised in that** the two elongated members (102) joining the two fastening devices (200) are configured to deform downwards when the weight of an animal attempting to cross the barrier formed by the safety device (99) is applied, and **in that** the fastening devices (200) are configured to allow the elongated members (102) to be held in tension, and wherein the displacement of the elongated members (102) to which they are fastened allows the said elongated members (102) to be deformed downwards when the weight of a pet is applied;
and **in that** the elongated members of the safety device furthermore comprise a cord component (102) threaded through perforations (11) provided on each fastening device (200), an anchoring device (66) on the end of a cord component (102), means for fastening to a balustrade, guide means (30), and means for self-locking the cord components (102) .

2. The device according to claim 1, wherein the cord component (102) is made of elastomer.

3. The device according to claim 1 or claim 2 comprising a connector (101) for connecting the ends of a cord component (102).

4. The device according to claim 3, wherein the connector (101) comprises a tensioner for the cord component (102).

5. The device according to any one of the preceding claims, wherein each fastening device (200) comprises a vertical portion (1) and a horizontal balustrade interface portion (2) with balustrade interface means (10, 20).

6. The device according to claim 5, wherein the balustrade interface means (10, 20) belongs to the group consisting of: adhesive, ferromagnetic.

7. The device according to claim 5, wherein the device comprises a balustrade interface portion (2) detachable from the vertical portion (1).

8. The device according to claim 5,
**characterised in that** the anchoring device (66) comprises a plate (67) capable of being fastened in use to the balustrade, and a vertical attachment portion (68) with at least three holes (69) for attaching, passing through and securing the cord components (102) to the anchoring device (66).

9. The device according to claim 5, **characterised in that** the anchoring device (66) comprises self-locking means, capable of maintaining each cord component (102) under tension in the event of weight being applied downwards between two fastening devices (200).

10. The device according to claim 9, **characterised in that** the self-locking means comprise a fin structure (41, 42) projecting vertically upwards and arranged in juxtaposition behind guide means (30).

11. The device according to claim 10, **characterised in that** interstitial spaces (43) separating at least two fins form at least one V-shaped recess, which allows the cord component (102) to be clamped by pinching.

12. The device according to claim 11, **characterised in that** the surfaces forming the V-shaped recess between the fin structures (41,42) have a raised surface (44) serving to increase the coefficient of friction with the cord component (102) and improve the anchoring of said cord component (102).
